# EUROPEAN PATENT SPECIFICATION

(11) **EP 2 867 017 B1**
(45) Date of publication and mention of the grant of the patent: **06.09.2017**
(21) Application number: 13733306.8
(22) Date of filing: 02.07.2013
(51) Int. Cl.: E04F 15/22, E04F 15/10, B32B 25/04, B32B 27/06

(54) **SHOCK ABSORPTION FLOORING**
STOSSDÄMPFENDER BODENBELAG
REVETEMENT DE SOL RESISTANT AUX CHOCS

(30) Priority: 02.07.2012 EP 12305792
(43) Date of publication of application: 06.05.2015
(73) Proprietor: Tarkett G.D.L. S.a., 9779 Lentzweiler (LU)
(72) Inventor: GOURDIN, Diego, B-9559 Wiltz (BE)
(74) Representative: Lavoix
(86) International application number: PCT/EP2013/063972
(87) International publication number: WO 2014/006062

(56) References cited:
- WO-A1-02/055299
- US-A1- 2007 042 828

## Description

### [Technical Field]

The present invention concerns the field of synthetic floor coverings. More specifically, it refers to flooring with strong shock absorption along with low indentation. It also concerns a process for the manufacture of such flooring and its use in particular in hospitals and residences for elderly people.

### [Background Art]

In particular among the elderly, falls onto hard surfaces are a significant cause of injury and accidental death. Among the elderly, falls are the ninth leading cause of death and the leading cause of fatal and non-fatal injuries. Among non-fatal injuries due to falling, hip fractures are common and often result in a permanent loss of mobility.

There are strategies that can be employed to reduce the risk of falling in older adults, such as the promotion of strength and balance exercises or the improvement of lightning and footwear.

The fact that some falls are inevitable does not mean that the consequences of the falls are unimportant. Even a minor injury to a frail older person who is just managing to care for him or herself can lead to institutional care.

In order to reduce the impact of falls, special shock absorbing floorings have been proposed.

These floorings generally ensure shock absorbance through vertical deformation, for instance by flattening. Such vertical deformation however implies an increase in the push-pull force required to move heavy objects such as wheeled medical equipment. Such flooring is thus inappropriate for use in hospitals or residences for elderly people.

The patent US 7,575,796 proposes an impact safety matting in form of a resilient mat system that comprises an upper layer which is supported by resilient columns. This flooring however has to be covered by a conventional floor coating, and thus requires two separate installation steps. Further, the resulting thickness is so important that it generally requires other adjustments, notably with regard to the height of the doors.

The patent application US 2007/0042828 discloses a modular safety base mat comprising a top mat adhered to a shock absorbing base mat and a top coat applied on the top mat to form a protective finish. These mats are even more complicated to install as the base mats need to be assembled before being adhered to the top mats, and also result in thick flooring.

### [Summary of Invention]

### [Technical Problem]

It is thus one object of the present invention to provide flooring which limits the consequences of falls while allowing for the transport of wheeled equipment without undue difficulty.

It is a further object of the present invention to provide such flooring which is easy to produce and to ship.

It is another object of the present invention to provide such flooring which may be installed easily and fast and may be used as a ready-to-use single floorcovering.

It is yet another object of the present invention to provide such flooring which has a thickness comparable to conventional flooring.

### [Solution to Problem]

According to a first aspect, the invention is directed to a shock-absorbing flooring which is comprised of:
- a base layer based on a polymer foam, whereby said polymer comprises PVC and has an open cell foam structure; and
- an top layer based on an elastomeric material based on styrene-butadiene rubber, the top layer being bonded to the base layer by an intermediate bonding layer,
wherein the flooring possesses a shock absorbance of 20 to 40% (as measured according to EN 14808) and a residual indentation of less than 0.3 mm (as measured according to EN 433) and a density of 400 to 500 kg/m³.

According to specific embodiments, the flooring comprises one or more of the following features:
◊ the elastomeric material of the top layer is vulcanized rubber;
◊ the flooring has a thickness of 8 mm or less;
◊ the shock absorbance of the flooring is comprised between 25 and 35% (as measured according to EN 14808); and/or
◊ the mean residual indentation is less than 0,1 mm (as measured according to EN 433).

According to a second aspect, the invention is directed to a process for the manufacture of the flooring as defined above, which comprises the steps of:
(i) providing a sheet of elastomeric material;
(ii) providing a sheet of polymer foam; and
(iii) bonding the sheet of polymer foam onto the surface of elastomeric material by means of a suitable adhesive.

Preferably, the process above further comprises the step of:
(iv) packaging the resulting shock absorbing flooring in the form of a roll.

According to a third aspect, the invention is finally directed to a use of the shock absorbing flooring according to the invention, as a ready-to-use single floorcovering.

The flooring according to the invention shows a combination of resilience and indentation which is appropriate to reduce injuries upon fall while yet allowing for easy transportation of heavy objects such as beds and wheel-chairs.

The flooring according to the invention may be assembled during manufacture, which greatly facilitates shipment and allows for easy and fast installation.

According to a preferred embodiment, the flooring of the invention has a thickness which is comparable to convention flooring, notably less than 10mm, which avoids any requirement for adjustments to doors and furniture.

### [Detailed Description]

According to the present invention, the above indicated problems may be solved by flooring which comprises, in its largest definition, a base layer based on a polymer foam and an upper layer based on an elastomeric material such as rubber, both layers being assembled by means of an appropriate adhesive.

Indeed, the specific combination of these materials yields flooring which combines the advantageous properties of both the polymer foam and the rubber and thereby provides a product with the combination of good shock absorption and low residual indentation required for use in hospitals and residencies for elderly people.

The base layer comprises polymer foam, which comprises PVC.

The foam has an open cell foam structure, however a closed cell foam structure, while generally less efficient in shock absorbance may also be appropriate.

The formulation of the polymer foam preferably comprises 20 to 80, preferably 30 to 70 and in particular 40 to 60 % by weight of polyvinylchloride.

The polymer foam formulation may further comprise one or more filler, stabilizer, kicker, blowing agent, pigment, plasticizer or other conventional additives.

Preferably, the filler represents between 0 and 200 Phr, the stabilizer between 0,5 and 5 Phr, the pigment between 0 and 10 Phr, the plasticizer between 10 and 60 Phr. The unit "Phr" stands for "parts per hundred rubber" and indicates the number of parts by weight with respect to 100 parts of the polymer.

The filler may be chosen from conventional fillers such as hydrates, oxides, clays, carbonates, dolomite, talc or mixtures thereof. Particularly preferred is chalk (Durcal 5 from Omya AB).

The stabilizer may be chosen from any conventional stabilizer used with PVC, such as mixed metal soaps such as calcium, barium, cadmium, zinc and/or lead stearate. A preferred stabilizer may comprise 50 to 60% by weight of zinc octoate and 5 to 10% by weight of potassium octanoate.

The pigment may be chosen from conventional pigments. Particularly preferred are pigments such as titanium dioxide, C.I. Red 144, C.I. Blue 15:1, C.I. Black 7, C.I. Green 7, C.I. Yellow 83 or C.I. Violet 23.

The plasticizer may be chosen from any suitable plasticizer such as DINP (Di-isononylphtalate) or DIDP (Di-isodecylphtalate), for example those available from Exxon Mobile or Evonik GmbH.

After foaming, the base layer has a thickness of preferably less than 7 mm, and preferably lass than 5 mm.

The polymer foam ensures in particular good shock absorption of the flooring according to the invention and thereby contributes to reduce the risk of injury upon falling. It further provides a product with a suitable density of 400 to 500, preferably 420 to 480 kg/m³.

The upper layer of the flooring according to the invention is based on an elastomeric material such as rubber. The rubber provides for a better behavior in terms of residual indentation and thus allows the easy displacement of heavy objects such as beds and wheel-chairs, compared to products with a top layer based on rigid PVC.

The elastomeric component is styrene-butadiene rubber. Therefore, the material comprises generally a sulfur compound as a vulcanizer. Particularly suitable are compounds such as sulfur, thiazoles such as 2,2'-Dithiobis(benzothiazole)(MBTS), 2-(4-Morpholinothio) benzothiazole (MBS), sulfenamides such as N-tert-butyl-2-benzothiazolesulfenamide (TBBS) or N-oxydiethylene-thiocarbamyl-N-oxydiethylene-sulfenamide (sold under the name Cure-Rite 18) or mercaptans such as 2-mercaptotoluimidazole (Vanox MTI) and disulfides such as tetramethylthiuramdisulfide (TMTM).

The vulcanisation of rubber may be achieved by any conventional method, but will generally be carried out by heating the formulation at a temperature of between 120 and 180°C for a period of several minutes to an hour. The choice of the device used to carry out the vulcanisation is not critical although for practical reasons, molding is preferred for the manufacture of tiles and a rotocure is preferred for the manufacture of flooring in sheet form.

The elastomeric formulation may further comprise one or more filler, antioxidant, pigment, plasticizer or other conventional additives.

Preferably, the filler represents between 0 and 400 Phr, the antioxidant between 0 and 200 Phr, the pigment between 0 and 200 Phr, the plasticizer between 0 and 300 Phr.

The filler may be chosen from conventional fillers such as hydrates, oxides, clays, carbonates, dolomite, talc or mixtures thereof. Particularly preferred is kaolin.

The pigment may be chosen from conventional pigments such as those mentioned above with respect to the polymer foam formulation.

The top layer has a thickness of preferably less than 5 mm, and preferably lass than 3 mm.

The elastomer ensures a good resistance to traffic and further excellent energy restitution. It further limits the loss of thickness under pressure and thus allows for a reduced resilience.

While not wishing to be bound by any theory, it is at present assumed that the elastomeric layer may dissipate a larger amount of the energy laterally instead of vertically.

As a consequence, the flooring according to the invention shows a very low indentation which allows for easy displacing of objects, even heavy ones such as beds or wheel-chairs.

The flooring according to the invention further comprises an adhesive layer which secures the base layer to the top layer and thus provides for a product which may be rolled, shipped and installed as a single product.

In principle, any adhesive appropriate for bonding polymer foam and elastomers may be used within the present invention. These include in particular polyurethane adhesives, notably dispersed in water such as those sold under the name Dispercoll® by Bayer Materialscience.

The adhesive may be applied to the surfaces using any conventional technique such as roller coating and subsequently heated to evaporate the water from the dispersion. The thickness of the bonding layer is preferably less than 1 mm.

The flooring according to the present invention may be manufactured using existing equipment for the manufacture of multilayer products.

The process comprises in particular the steps of:
(i) providing a sheet of elastomeric material;
(ii) providing a sheet of polymer foam; and
(iii) bonding the sheet of polymer foam onto the surface of elastomeric material by means of a suitable adhesive.

Preferably, the process also comprises the subsequent step of:
(iv) packaging the resulting shock absorbing flooring in the form of a roll.

The product packaged onto a single roll is easy to produce and to ship to the desired site.

The flooring according to the invention may be installed easily and quickly, in a single step as it does not require any assembly nor to be covered by a conventional floor coating.

The flooring according to the invention may thus be placed into position in a single step, which accelerates the process of installation and thus saves costs.

The flooring according to the invention does not require any further treatment and may thus be used as a ready-to-use single floorcovering.

Generally, the flooring according to the invention does not need to be secured to the underground. However, if desired, the flooring may be further secured to the underground either with an adhesive sealant.

Further, the flooring according to the invention may be manufactured with a reduced thickness, notably of less than 10 mm, which further simplifies the installation as it avoids the requirement of specific adjustments such as raising the doors.

### [Examples]

### EXAMPLE 1

### Preparation of flooring

A surface covering is manufactured as follows.

A PVC foam formulation is prepared by mixing in a suitable vessel the components in the proportions indicated in table 1 below. The mixture obtained is coated onto a release paper to form a coating of a thickness of 1,5 mm. The formulation is then heated for 2 minutes at a temperature of 170°C for pre-gelation and then for 3,5 minutes at a temperature of 190°C for fusion and expansion. The foamed PVC sheet thus obtained, has mainly open cells and a final thickness of 5 mm.

A rubber formulation is prepared by mixing in a suitable vessel the components in the proportions indicated in table 2 below. The mixture obtained is transformed into sheet of rubber. The rubber formulation is vulcanised by filling it into a mould and heating the mould for 10 min to a temperature of 152°C (306°F).

The foamed PVC sheet obtained is adhered to the rubber sheet using a suitable adhesive (Dispercoll^{®} U 53). The adhesive is roller coated onto the unfoamed surface of the PVC sheet and then dried in an oven. The coated PVC sheet is then heated to 70°C in an infrared oven before assembly with the rubber sheet by lamination.

The flooring thus assembled has a thickness of 8,3 mm. The density of the product obtained is 455 kg/m³.

**Table 1: PVC foam formulation**

| Component | Name | Quantity (in Phr) |
|---|---|---|
| PVC | PEVIKON P 682 (sold by Ineos) / VINNOLIT E 68 CF (sold by Vinnolit) | 100 |
| Filler | calcium carbonate DURCAL 5 (sold by Omya) | 50 |
| Plasticizer | Di-isononylephtalate (DINP) | 34 |
| Plasticizer | JAYFLEX MB 10 (sold by ExxonMobil Chemicals) | 14 |
| Plasticizer | BENZOFLEX 9-88 (sold by Eastman Plasticizers) | 14 |
| Blowing agent | UNIFOAM AZ ULTRA 1050 (sold by Otsuka Chemical) | 1.7 |
| Kicker | LASTAB EK 545 T (sold by Lagor) | 2.5 |
| Processing additive | BYK P 4100 (sold by BYK) | 6.5 |
| TOTAL | | 222.7 |

**Table 2: Rubber top layer formulation**

| Component | Name | Quantity (in Phr) |
|---|---|---|
| Styrene-Butadiene | SBR 1502 | 100,0 |
| Filler | Silane ester on calcium silicate | 1,5 |
| Filler (kaolin) | PV 642 Clay | 250,0 |
| Lubricant for filler | Stearic Acid | 1,5 |
| Antioxydant | Tetrakis [methylene (3,5-di-tert-butyl-4-hydroxyhydrocinnamate)] methane | 1,0 |
| Wax | CSL-57 (sold by Crystal, Inc.) | 1,0 |
| Processing Aid | Fatty acid soaps | 5,0 |
| Processing Additive | Hydrocarbon resin | 5,0 |
| Vulcanizer | Insoluble sulfur | 4,2 |
| Vulcanizer | N-tert-butyl-2-benzothiazolesulfenamide | 1,6 |
| Vulcanizer | MBTS | 0,8 |
| Vulcanizer | TMTD | 0,3 |
| TOTAL | | 372,1 |

### EXAMPLE 2

### (Comparative example)

### Preparation of flooring

A surface covering is manufactured as follows.

The protocol of example 1 is repeated, except that the rubber top layer is replaced by a rigid PVC top layer.

### a. Indentation

In order to verify the properties upon use of the flooring according to the invention, the resilience and residual indentation were evaluated for floorings of examples 1 and 2 according to the protocol set out in the standard EN 433.

In this protocol, a test piece is subjected to a static loading, the thickness being measured before loading and after various recovery periods.

More specifically, the initial thickness t₀ of the sample is measured. Then an annular indenter (diameter of 11,3 mm and area of 100 mm²) is applied for 5 s with a preliminary force of 3 N and then with a force of 500 N for 150 min. Before removing the indenter, the depth of indentation t₂ is measured. Finally, the thickness t₁ is measured after a further 150 minutes.

The resilience of the sample is given by the difference between the initial thickness t₀ and t₂ immediately after the test and represents the maximum compression.

The residual indentation of the sample is given as the difference between t₀ and t₁ and thus the loss of thickness remaining 2,5 h after the test.

The results of the measurements made for 10 samples, respectively, are summarized in tables 4A and 4B below. It is to be concluded that the flooring according to the invention shows in particular an indentation which is close to zero and thus excellent, compared to flooring comprising a rigid PVC top layer.

**Table 3A: Residual indentation and resilience (example according to the invention)**

| **Example 1** | 1 | 2 | 3 | 4 | 5 | 6 | 7 | 8 | 9 | 10 |
|---|---|---|---|---|---|---|---|---|---|---|
| Initial thickness (t₀) [mm] | 8,15 | 8,20 | 8,14 | 8,17 | 8,02 | 7,95 | 7,86 | 8,30 | 8,05 | 7,96 |
| Thickness after test (t₂) [mm] | 6,92 | 6,95 | 7,03 | 7,07 | 7,00 | 7,01 | 6,91 | 7,48 | 7,21 | 7,29 |
| Thickness 2,5 h after test (t₁) [mm] | 8,36 | 8,30 | 8,29 | 8,26 | 8,16 | 8,10 | 7,97 | 8,45 | 8,17 | 8,16 |
| Resilience [mm] | 1,23 | 1.25 | 1.11 | 1.10 | 1.02 | 0.94 | 0.95 | 0.82 | 0.84 | 0.67 |
| Mean Resilience [mm] | 0,99 | | | | | | | | | |
| Residual indentation [mm] | -0,21 | -0,10 | -0,15 | -0,09 | -0,14 | -0,15 | -0,11 | -0,15 | -0,12 | -0,20 |
| Mean residual Indentation [mm] | -0,14 | | | | | | | | | |

**Table 3B: Indentation and resilience (example of comparison)**

| **Example 2** | 1 | 2 | 3 | 4 | 5 | 6 | 7 | 8 | 9 | 10 |
|---|---|---|---|---|---|---|---|---|---|---|
| Initial thickness (t₀) [mm] | 7,81 | 7,57 | 7,69 | 7,69 | 7,75 | 7,33 | 7,45 | 7,17 | 7,62 | 7,21 |
| Thickness after test (t₂) [mm] | 6,41 | 6,30 | 6,46 | 6,39 | 6,32 | 6,23 | 6,26 | 6,13 | 6,53 | 5,97 |
| Thickness 2,5 h after test (t₁) [mm] | 7,45 | 7,26 | 7,37 | 7,31 | 7,20 | 7,02 | 7,09 | 6,90 | 7,26 | 6,71 |
| Resilience [mm] | 1,40 | 1,27 | 1,23 | 1,30 | 1,43 | 1,10 | 1,19 | 1,04 | 09 | 1,24 |
| Mean Resilience [mm] | 1,23 | | | | | | | | | |
| Residual Indentation [mm] | 0,36 | 0,31 | 0,32 | 0n38 | 0,55 | 0,31 | 0,36 | 0,27 | 0.36 | 0.50 |
| Mean residual (t₁) Indentation [mm] | 0.37 | | | | | | | | | |

### b. Shock absorption

The shock absorption of flooring according to example 1 and 2 were evaluated according to the protocol set out in the standard EN 14808.

In this protocol, also called the artificial athlete, a weight is dropped onto a spring placed on the sample and the maximum force applied to the sample is determined. The ratio between this force and the maximum force measured on a hard surface, designated as the "force reduction", is representative of the shock absorption.

The results are summarized in table 5 below. They show that the flooring according to the invention possesses satisfactory shock absorption properties along with better energy restitution, compared to flooring comprising a rigid PVC top layer.

**Table 4: Shock absorption and energy restitution**

| | **Example 1** | | | **Example 2** | | | | | |
|---|---|---|---|---|---|---|---|---|---|
| | 1 | 2 | 3 | 1 | 2 | 3 | 4 | 5 | 6 |
| Shock absorption [%] | 30,0 | 33,0 | 33,3 | 37,6 | 37,5 | 38,0 | 37,6 | 35,8 | 32,0 |
| Shock absorption [%] | 29,5 | 31,1 | 30,8 | 33,9 | 34,7 | 34,5 | 34,4 | 32,1 | 30,5 |
| Shock absorption [%] | 29,3 | 30,8 | 30,4 | 33,7 | 34,2 | 34,1 | 34,2 | 31,3 | 30,4 |
| Mean shock absorption [%] | 29,4 | 31,0 | 30,6 | 33,8 | 34,5 | 34,3 | 34,3 | 31,7 | 30,4 |
| Mean [%] | 30,8 | | | 33,2 | | | | | |
| Energy restitution [%] | 48,3 | 42,9 | 42,6 | 36,6 | 36,6 | 36,4 | 36,9 | 39,6 | 42,0 |
| Energy restitution [%] | 50,0 | 47,0 | 48,3 | 43,5 | 41,7 | 42,9 | 42,3 | 43,8 | 45,1 |
| Energy restitution [%] | 50,0 | 48,3 | 49,3 | 43,8 | 42,3 | 43,5 | 43,2 | 46,7 | 46,4 |
| Mean Energy restitution [%] | 50,0 | 47,7 | 48,8 | 43,7 | 42,0 | 43,2 | 42,7 | 45,3 | 45,7 |
| Mean [%] | 48,8 | | | 43,8 | | | | | |

### c. Curl

The tendency to curl of flooring according to example 1 and 2 was evaluated according to the protocol set out in the standard EN 434, modified with regard to the duration and the temperature of the test.

According to this protocol, the sample length is measured with precision at 20 mm of the border. After at least one hour, the mean sample thickness is measured at four different locations close to the border, as set out in EN 428. The samples are then stored during 2 weeks in an oven at 70°C, and then reconditioned at ambient temperature and humidity for at least 24 hours before repeating the measurement of the sample length and thickness.

The curl is the mean value of the differences between the thickness measured for each location after the test and the mean thickness measured before the test.

The results are summarized in table 6 below. They show that the flooring according to the invention shows an excellent resistance with regard to curl compared to flooring comprising a rigid PVC top layer.

**Table 5: Curl**

| | **Example 1** | | | | | **Example 2** | | | | |
|---|---|---|---|---|---|---|---|---|---|---|
| | 1 | 2 | 3 | 4 | mean | 1 | 2 | 3 | 4 | mean |
| Curl (initial) | 0 | 0 | 0 | 0 | 0 | 5.7 | 13.7 | 13.4 | 7.1 | 10.0 |
| Curl (after 2 weeks at 70°C) | 0 | 0 | 0 | 0 | 0 | 7.5 | 20 | 16.6 | 7 | 12.8 |

## Claims

1. A shock-absorbing flooring which is comprised of:
- a base layer based on a polymer foam, wherein the polymer foam comprises PVC and has an open cell foam structure; and
- an top layer based on styrene-butadiene rubber, the top layer being bonded to the base layer by an intermediate bonding layer,
wherein the flooring possesses a shock absorbance of 20 to 40% (as measured according to EN 14808) and a residual indentation of less than 0.3 mm (as measured according to EN 433) and a density of 400 to 500 kg/m³.

2. The shock absorbing flooring according to claim 1, wherein the elastomeric material in the top layer is vulcanized rubber.

3. The shock absorbing flooring according to claim 2, having a thickness of 8 mm or less.

4. The shock absorbing flooring according to any of claims 1 to 3, wherein the shock absorbance is comprised between 25 and 35% (as measured according to EN 14808).

5. The shock absorbing flooring according to any of claims 1 to 4, wherein the mean indentation is less than 0,1 mm (as measured according to EN 433).

6. Process for the manufacture of a shock absorbing flooring according to any of claims 1 to 5, comprising the steps of:
(i) providing a sheet of elastomeric material;
(ii) providing a sheet of polymer foam; and
(iii) bonding the sheet of polymer foam onto the surface of elastomeric material by means of a suitable adhesive.

7. A process according to claim 6, further comprising the step of: (iv) packaging the resulting shock absorbing flooring in the form of a roll.

8. Use of the shock absorbing flooring according to any of claims 1 to 5, as a ready-to-use single floorcovering.

## Patentansprüche

1. Stoßabsorbierender Bodenbelag enthaltend:
- eine Grundschicht basierend auf einem Polymerschaum, wobei der Polymerschaum PVC umfasst und eine offenzellige Schaumstruktur aufweist; und
- eine Deckschicht basierend auf Styrol-Butadien-Kautschuk, wobei die Deckschicht mit der Grundschicht über eine Zwischen-Bindeschicht verbunden ist,
wobei der Bodenbelag eine Stoßabsorption von 20 bis 40% besitzt (gemessen gemäß EN 14808) und einen Resteindruck von weniger als 0,3 mm (gemessen gemäß EN 433) und eine Dichte von 400 bis 500 kg/m³.

2. Stoßabsorbierender Bodenbelag gemäß Anspruch 1, wobei das elastomere Material in der Deckschicht vulkanisierter Kautschuk ist.

3. Stoßabsorbierender Bodenbelag gemäß Anspruch 2, der eine Dicke von 8 mm oder weniger aufweist.

4. Stoßabsorbierender Bodenbelag gemäß einem der Ansprüche 1 bis 3, wobei die Stoßabsorption zwischen 25 und 35% (gemessen gemäß EN 14808) beträgt.

5. Stoßabsorbierender Bodenbelag gemäß einem der Ansprüche 1 bis 4, wobei der mittlere Resteindruck weniger als 0,1 mm (gemessen nach EN 433) ist.

6. Verfahren zur Herstellung eines stoßabsorbierenden Bodenbelags gemäß einem der Ansprüche 1 bis 5, umfassend die Schritte:
(i) Bereitstellen einer Schicht aus elastomerem Material;
(ii) Bereitstellen einer Schicht aus Polymerschaum; und
(iii) Binden der Schicht aus Polymerschaum auf die Oberfläche aus elastomerem Material mit Hilfe eines geeigneten Klebemittels.

7. Verfahren gemäß Anspruch 6, weiterhin umfassend den Schritt:
(iv) Verpacken des resultierenden stoßabsorbierenden Bodenbelags in Form einer Rolle.

8. Verwendung des stoßabsorbierenden Bodenbelags gemäß einem der Ansprüche 1 bis 5 als gebrauchsfertiger Einzelbodenbelag.

## Revendications

1. Revêtement de sol absorbant les chocs, comprenant :
- une couche de base à base de mousse de polymère, dans lequel la mousse de polymère comprend du PVC et a une structure cellulaire à alvéoles ouverts ; et
- une couche supérieure à base de caoutchouc styrène-butadiene, la couche supérieure étant liée à la couche de base par une couche de liaison intermédiaire,
dans lequel le revêtement de sol a une absorbance des chocs de 20 à 40 % (telle que mesurée selon la norme EN 14808) et une indentation résiduelle inférieure à 0,3 mm (telle que mesurée selon la norme EN 433) et une densité de 400 à 500 kg/m³.

2. Revêtement de sol absorbant les chocs selon la revendication 1, dans lequel le matériau élastomère dans la couche supérieure consiste en du caoutchouc vulcanisé.

3. Revêtement de sol absorbant les chocs selon la revendication 2, ayant une épaisseur de 8 mm ou moins.

4. Revêtement de sol absorbant les chocs selon l'une quelconque des revendications 1 à 3, dans lequel l'absorbance des chocs est comprise entre 25 et 35 % (telle que mesurée selon la norme EN 14808).

5. Revêtement de sol absorbant les chocs selon l'une quelconque des revendications 1 à 4, dans lequel l'indentation moyenne est inférieure à 0,1 mm (telle que mesurée selon la norme EN 433).

6. Processus de fabrication d'un revêtement de sol absorbant les chocs selon l'une quelconque des revendications 1 à 5, comprenant les étapes :
(i) de fourniture d'une feuille de matériau élastomère ;
(ii) de fourniture d'une feuille de mousse de polymère ; et
(iii) de collage de la feuille de mousse de polymère sur la surface du matériau élastomère au moyen d'un adhésif approprié.

7. Processus selon la revendication 6, comprenant en outre l'étape :
(iv) de conditionnement du revêtement de sol absorbant les chocs résultant sous la forme d'un rouleau.

8. Utilisation du revêtement de sol absorbant les chocs selon l'une quelconque des revendications 1 à 5 en tant que revêtement de sol unique prêt à l'emploi.
